# EUROPEAN PATENT APPLICATION

(11) **EP 4 354 625 A1**
(43) Date of publication of application: **17.04.2024**
(21) Application number: 22907982.7
(22) Date of filing: 15.12.2022
(51) Int. Cl.: H01M 50/342, H01M 50/578, H01M 50/167

(54) **SECONDARY BATTERY AND BATTERY MODULE INCLUDING SAME**

(30) Priority: 15.12.2021 KR 20210180019; 08.12.2022 KR 20220170293
(71) Applicant: LG ENERGY SOLUTION, LTD., Seoul 07335 (KR)
(72) Inventor: KIM, Young Soo, Daejeon 34122 (KR); LEE, Kwan Soo, Daejeon 34122 (KR)
(74) Representative: Hoffmann Eitle
(86) International application number: PCT/KR2022/020510
(87) International publication number: WO 2023/113515

(57) **Abstract**

A secondary battery according to one embodiment of the present disclosure includes an electrode assembly which comprises electrodes and a separator; a battery can which houses the electrode assembly and has an opened upper part; and a safety vent which is coupled to the open upper part of the battery can, wherein the electrode assembly comprises an electrode tab protruding from one of the electrodes in a direction in which the safety vent is located, wherein the safety vent is formed with a notch part extending along the peripheral direction, wherein the safety vent comprises a central part positioned inside the notch part and an outer peripheral part positioned outside the notch part, and wherein the electrode tab is attached to a lower surface of the outer peripheral part.

## Description

### [TECHNICAL FIELD]

### Cross Citation with Related Application(s)

This application claims the benefit of Korean Patent Application No. 10-2021-0180019 filed on December 15, 2021 and Korean Patent Application No. 10-2022-0170293 filed on December 8, 2022 in the Korean Intellectual Property Office, the entire contents of which are incorporated herein by reference.

The present disclosure relates to a secondary battery and a battery module including the same, and more particularly, to a secondary battery with enhanced safety and space utilization, and a battery module including the same.

### [BACKGROUND]

Recently, as energy source price is increasing due to the depletion of fossil fuels and increasing interest is being paid to environmental pollution, the demand for environmentally-friendly alternative energy sources is bound to play an important role in the future life. Thus, research into techniques for generating various kinds of power, such as nuclear energy, solar energy, wind energy, and tidal power, is underway, and power storage apparatuses for more efficient use of the generated energy are also drawing much attention.

In particular, along with the technology development and increased demand for mobile devices, demand for batteries as energy sources has been increasing rapidly, and accordingly, much research on batteries which can meet the various needs has been carried out.

Typically, the demand for the lithium secondary battery, such as a lithium ion battery or a lithium ion polymer battery, which have advantages such as a high energy density, a discharge voltage, an output stability, and the like is high.

Further, the secondary battery may be classified on the basis of the structure of an electrode assembly having a structure in which a cathode and an anode are stacked with a separator being interposed therebetween. Typically, there may mentioned, for example, a jelly-roll type electrode assembly having a structure in which long sheets of cathodes and anodes are wound in the state in which a separator is interposed therebetween, a stacked type electrode assembly having a structure in which pluralities of cathodes and anodes, cut by a certain size unit, are sequentially stacked in the state in which separators are interposed therebetween, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly, having a structure in which unit cells stacked with predetermined units of the cathodes and the anodes are sequentially wound with a separator being interposed therebetween in the state of having been placed on a separation film.

Further, based on the shape of a battery case, the secondary battery is classified into a cylindrical battery where an electrode assembly is mounted in a cylindrical case, a prismatic battery where an electrode assembly is mounted in a prismatic can, and a pouch type battery where an electrode assembly is mounted in a pouch type case of an aluminum laminate sheet.

Meanwhile, a secondary battery should satisfy performance suitable for the intended use and at the same time, has safety, thereby capable of being suitably used in the market. When designing a secondary battery, the design factors are determined in consideration of these performance and safety aspects at the same time. Batteries whose design and manufacturing have been completed are subjected to performance evaluations such as lifespan, high rate characteristics, and high/low temperature characteristics, as well as to safety evaluations such as overcharge, over-discharge, impact, nail test, and hot box.

For a cylindrical secondary battery among various types of secondary batteries, if gas is rapidly generated inside the secondary battery in an abnormal operating state such as overcharging or external short circuit, and the internal pressure exceeds a certain level, it may include a Current Interrupt Device (CID) filter that interrupts current between an electrode terminal and an electrode tab and thus prevents an additional reaction from occurring.

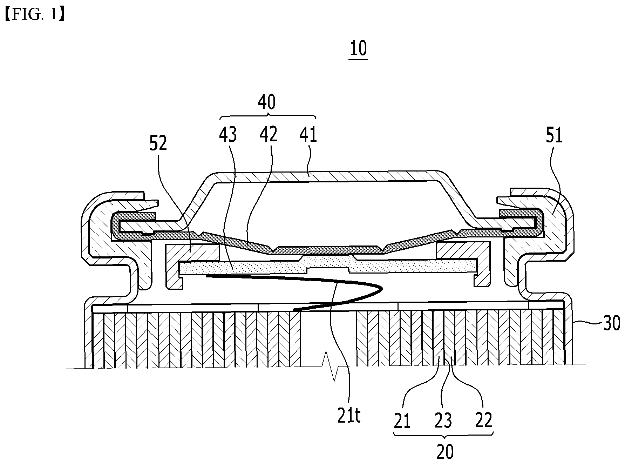

Fig. 1 is a partial cross-sectional view showing a cross section of an upper part of a conventional cylindrical secondary battery.

Referring to Fig. 1, an electrode assembly 20 is housed in a cylindrical can 30, and a cap assembly 40 is mounted on the opened upper part of the cylindrical can 30, thereby capable of manufacturing a cylindrical secondary battery 10.

The electrode assembly 20 may be a jelly-roll type electrode assembly in which a first electrode 21, a second electrode 22 and a separator 23 are rolled.

The cap assembly 40 may include an upper end cap 41, a safety vent 42 for lowering an internal pressure, and a CID (current interruption device) filter 43. The upper end cap 41 and the safety vent 42 may form a structure closely attached to each other, and the safety vent 42 may be connected to a central part of the CID filter 43. A first electrode tab 21t protruding from the first electrode 21 may be connected to a lower end part of the CID filter 43. Here, the first electrode 21 may be a cathode, and the first electrode tab 21t may be a cathode tab.

As described above, the upper end cap 41, the safety vent 42, the CID filter 43, and the first electrode tab 21t are sequentially connected, so that the upper end cap 41 can be electrically connected to the electrode assembly 20, and can function as an electrode terminal.

Meanwhile, a gasket 51 for sealing between the cap assembly 40 and the cylindrical can 30 and a CID gasket 52 surrounding an edge of the CID filter 43 can be arranged.

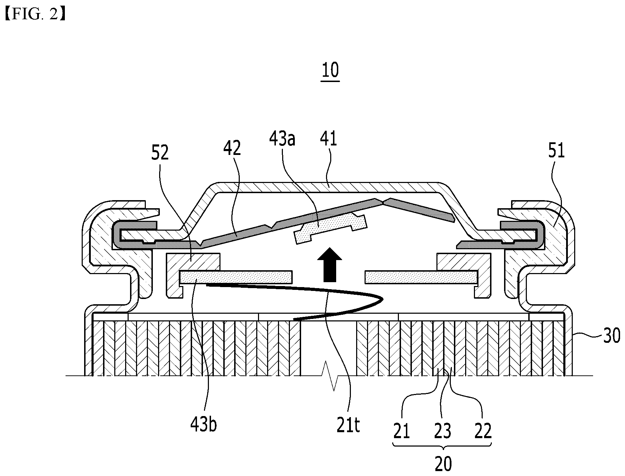

Fig. 2 is a partial cross-sectional view showing a state of the cylindrical secondary battery of Fig. 1 when an internal pressure rises.

Referring to Fig. 2, when the cylindrical secondary battery 10 is exposed to high temperatures or is placed in an abnormal operating state, gas is generated and the internal pressure rises, the shape of the safety vent 42 is reversed, and the CID filter 43 is separated to interrupt the current. Specifically, the CID filter 43 is divided into a part 43a connected to the safety vent 42 and a part 43b connected to the first electrode tab 21t, and a current flow between the upper end cap 41 serving as an electrode terminal and the first electrode tab 21t is interrupted. In addition, when the internal pressure rises significantly, the notch part of the safety vent 42 is interrupted, the safety vent 42 is opened, and the internal gas is discharged.

When the upper end cap 41 is provided like the conventional cylindrical secondary battery 10, the structural strength is excellent, but when the safety vent 42 is opened and the internal gas is discharged, there is a drawback that spatial portion is degraded by the upper end cap 41, and the safety vent 42 is fully opened, thus limiting gas discharge. In addition, there is a problem that the CID filter 43 cannot be reliably separated, and current continues to flow even in an abnormal operating state.

Therefore, there is a need to develop a secondary battery capable of reliably interrupting the current flow in an abnormal operating state and improving the utilization of the internal space.

### [DETAILED DESCRIPTION OF THE INVENTION]

### [Technical Problem]

The present disclosure is made to solve the above-mentioned problems, and an object of the present disclosure is to provide a secondary battery that can reliably interrupt the flow of current in an abnormal operating state while improving space utilization and increasing battery capacity by eliminating internal parts, and a battery module including the same.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a secondary battery comprising: an electrode assembly which comprises electrodes and a separator; a battery can which houses the electrode assembly and has an opened upper part; and a safety vent which is coupled to the open upper part of the battery can, wherein the electrode assembly comprises an electrode tab protruding from one of the electrodes in a direction in which the safety vent is located, wherein the safety vent is formed with a notch part extending along the peripheral direction, wherein the safety vent comprises a central part positioned inside the notch part and an outer peripheral part positioned outside the notch part, and wherein the electrode tab is attached to a lower surface of the outer peripheral part.

The notch part may be in the form of a groove having a thickness less than that of an adjacent region.

The safety vent may be exposed to the outside at the upper end.

A first external conductive wire for connection with an external electrical component may be attached to the upper surface of the central part.

The secondary battery may further comprise a gasket positioned between the battery can and the safety vent, wherein an upper end of the battery can is crimped and joined while being bent in a direction where the gasket is positioned, so that a crimping part can be formed in the battery can.

The safety vent may comprise a curling part formed by bending an outermost region of the outer peripheral part, and the gasket may surround the curling part.

The gasket may be positioned between the crimping part and the curling part.

The safety vent may comprise a bent part formed by bending a portion of the outer peripheral portion in an upward direction.

The thickness of the notch part may be 5% or more and 50% or less of the thickness of the safety vent.

According to another embodiment of the present disclosure, there is provided a battery module comprising: the secondary batteries; and a first external conductive wire and a second external conductive wire which electrically connect the secondary batteries, wherein the first external conductive wire is attached to the upper surface of the central part, and the second external conductive wire is attached to the battery can.

The battery can and the safety vent are crimped and joined to form a crimping part in the battery can, and the second external conductive wire may be joined to the crimping part.

### [Advantageous Effects]

According to embodiments of the present disclosure, the parts of the upper end cap and the CID filter are eliminated, thereby being able to increase space utilization and increase battery capacity by the amount of the eliminated parts.

In addition, by eliminating the above-mentioned parts, but adjusting the attachment position of the electrode tab and the external conductive wire with respect to the safety vent, it can effectively interrupt the flow of current in an abnormal operating state.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a partial cross-sectional view showing a cross section of an upper part of a conventional cylindrical secondary battery;
Fig. 2 is a partial cross-sectional view showing a state of the cylindrical secondary battery of Fig. 1 when an internal pressure rises;
Fig. 3 is an exploded perspective view of a secondary battery according to one embodiment of the present disclosure;
Fig. 4 is a partial cross-sectional view showing a cross section of an upper part of a secondary battery according to one embodiment of the present disclosure;
Fig. 5 is a cross-sectional perspective view of a safety vent included in the secondary battery of Fig. 3;
Fig. 6 is a partial view which enlarges and shows a section A of Fig. 4;
Fig. 7 is a partial cross-sectional view showing a state in which a first external conductive wire and a second external conductive wire are attached to the secondary battery of Fig. 3; and
Fig. 8 is a partial cross-sectional view showing the state of the secondary battery of Fig. 7 when the internal pressure rises.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

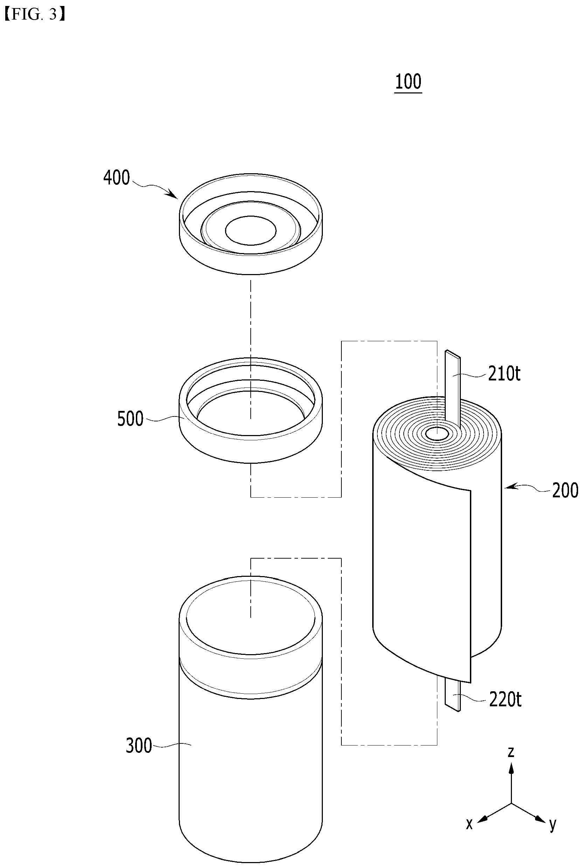

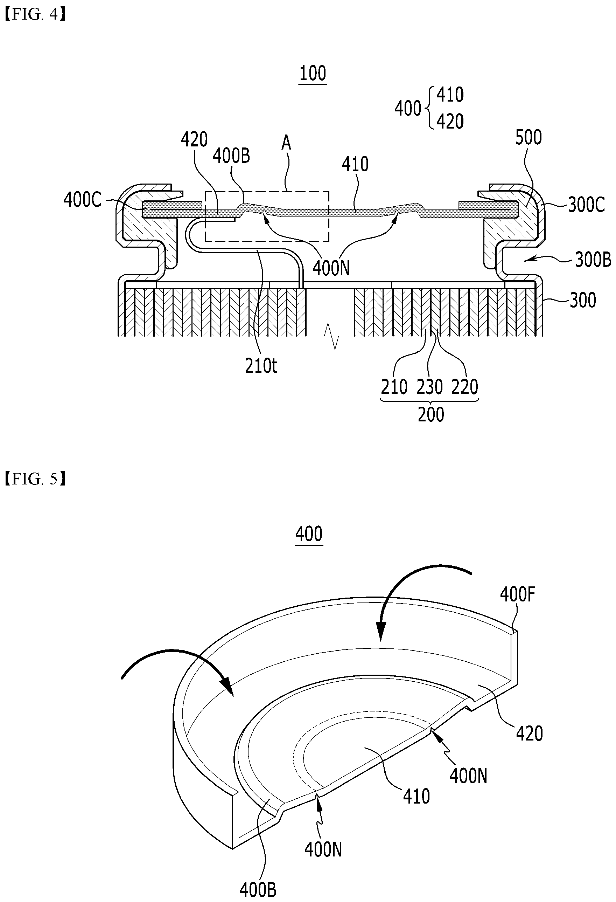

Fig. 3 is an exploded perspective view of a secondary battery according to one embodiment of the present disclosure. Fig. 4 is a partial cross-sectional view showing a cross section of an upper part of a secondary battery according to one embodiment of the present disclosure. In particular, Fig. 4 may be a cross-section of an upper part of the secondary battery of Fig. 3 cut along an xz plane after being assembled.

First, referring to Figs. 3 and 4, the secondary battery 100 according to one embodiment of the present disclosure includes an electrode assembly 200, a battery can 300 which houses the electrode assembly 200 and has an opened upper part; and a safety vent 400 which is coupled to the opened upper part of the battery can 300.

First, the electrode assembly 200 according to the present embodiment may include electrodes 210 and 220 and a separator 230. More specifically, the electrode assembly 200 may include a first electrode 210, a second electrode 220 and a separator 230. The first electrode 210, the second electrode 220, and the separator 230 can be rolled together to form a jelly-roll type electrode assembly 200. The separator 230 may be interposed between the first electrode 210 and the second electrode 220. In addition, in order to prevent the first electrode 210 and the second electrode 220 from contacting with each other when they are rolled in the form of a jelly roll, it is preferred that a separator 230 is further arranged.

Although not specifically shown in the figure, the first electrode 210 may be formed by applying an electrode active material onto the first electrode current collector. In a portion of the first electrode current collector where the electrode active material is not applied and the first electrode current collector is exposed, an electrode tab 210t may be attached by a method such as welding.

The second electrode 220 may be formed by applying an electrode active material onto the second electrode current collector. In a portion of the second electrode current collector where the electrode active material is not applied and the second electrode current collector is exposed, another electrode tab 220t may be attached by a method such as welding.

At this time, the first electrode 210 may be a cathode, and the second electrode 220 may be an anode. Thereby, the electrode tab 210t may be a cathode tab, and another electrode tab 220t may be an anode tab. Meanwhile, with respect to the rolled electrode assembly 200, the electrode tabs 210t and 220t may be protruded in mutually opposite directions. That is, the electrode assembly 200 includes an electrode tab 210t protruding from one of the electrodes 210 and 220 in the direction where the safety vent 400 is positioned, and an electrode tab 220t protruding from the other one of the electrodes 210 and 220 in a direction where the bottom part of the battery can 300 is positioned. The electrode tab 210t may be connected to the safety vent 400, and the other electrode tab 220t may be connected to the bottom part of the battery can 300. Thereby, the safety vent 400 and the battery can 300 can each function as electrode terminals of the secondary battery 100.

Meanwhile, the battery can 300 is a structure for housing the electrode assembly 200 impregnated with an electrolyte solution, which may include a metal material and may be a cylindrical can.

Next, the safety vent according to the present embodiment will be described in detail.

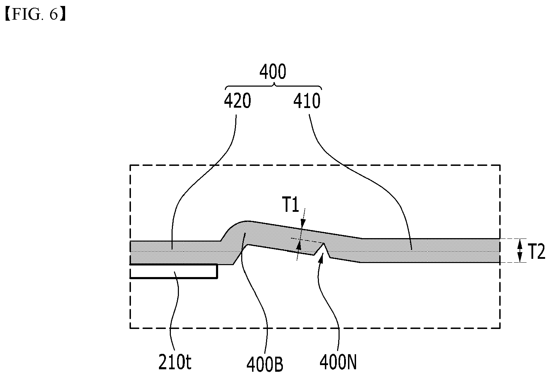

Fig. 5 is a cross-sectional perspective view of a safety vent included in the secondary battery of Fig. 3. Fig. 6 is a partial view which enlarges and shows a section A of Fig. 4. In particular, the safety vent in Fig. 5 is shown in a cross-sectional perspective view cut in half for convenience of illustration.

Referring to Figs. 4 to 6 together, the safety vent 400 according to the present embodiment may be formed with a notch part 400N extending along the peripheral direction, and the safety vent 400 includes a central part 410 positioned inside the notch part 400N and an outer peripheral part 420 positioned outside the notch part 400N. That is, in the safety vent 400, the central part 410 and the outer peripheral part 420 may be divided by a notch part 400N as boundary extending along the peripheral direction. This notch part 400N is in the form of a groove having a thickness less than the adjacent region. As an example, a state in which a V-shaped groove is formed on the lower surface of the safety vent 400 is illustrated.

At this time, the electrode tab 210t protruding from the electrode assembly 200 in the direction where the safety vent 400 is positioned is attached to a lower surface of the outer peripheral part 420 of the safety vent 400. The attachment method between the electrode tab 210t and the outer peripheral part 420 is not particularly limited as long as electrical connection is possible, but welding can be applied as an example.

Meanwhile, the safety vent 400 according to the present embodiment may be exposed to the outside at the upper end. Unlike the conventional secondary battery 10 shown in Figs. 1 and 2, which has an upper end cap 41 arranged on the upper part of the safety vent 42, the safety vent 400 according to the present embodiment has a structure in which the upper end cap is eliminated, and may be arranged on the uppermost side and exposed to the outside.

Thereby, in the secondary battery 100 according to the present embodiment, the safety vent 400 instead of the upper end cap functions as an electrode terminal. That is, as described above, the electrode tabs 210t are attached to the safety vent 400 and connected to each other, the safety vent 400 is exposed to the outside from the upper end, and a first external conductive wire for connection with an external electrical component may be attached to the upper surface of the safety vent 400. The safety vent 400 can function as an electrode terminal for guiding the current flow of the electrode assembly 200.

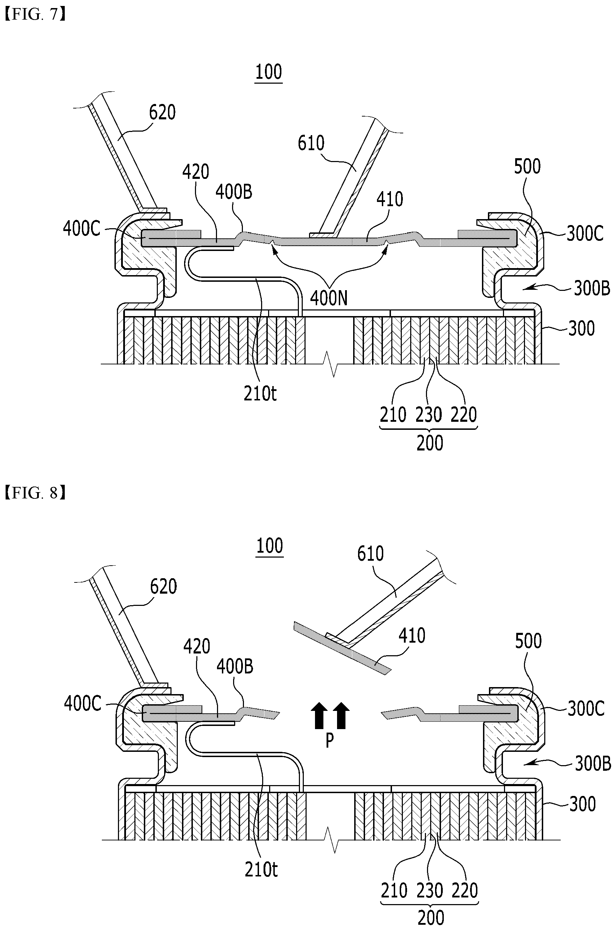

In particular, a first external conductive wire for connection with an external electrical component may be attached to the upper surface of the central part 410 of the safety vent 400. The electrode tab 210t and the first external conductive wire can be attached to regions that are distinguished from each other in the safety vent 400, in such a manner that the electrode tab 210t is attached to the outer peripheral part 420 and the first external conductive wire is attached to the central part 410. Through this configuration, the safety vent 400 may interrupt current in an abnormal operating state of the secondary battery 100. This will be described again below with reference to Figs. 7 and 8.

Fig. 7 is a partial cross-sectional view showing a state in which a first external conductive wire and a second external conductive wire are attached to the secondary battery of Fig. 3.

Referring to Fig. 7, a state in which a first external conductive wire 610 for connection with an external electrical component is attached to an upper surface of the central part 410 of the safety vent 400 is illustrated. Further, a second external conductive wire 620 for connection with other external electrical components may be attached to the battery can 300. The first external conductive wire 610 and the second external conductive wire 620 may include an electrically connectable metal material, and a welding method can be applied to both the attachment between the first external conductive wire 610 and the central part 410 and the attachment between the second external conductive wire 620 and the battery can 300.

As described above with reference to Fig. 3, the electrode tab 210t is connected to the safety vent 400, and another electrode tab 220t may be connected to the bottom part of the battery can 300. Thereby, the safety vent 400 and the battery can 300 each function as electrode terminals of the secondary battery 100, so that the first external conductive wire 610 and the second external conductive wire 620 can be attached thereto. The electrode tab 210t may be a cathode tab, and another electrode tab 220t may be an anode tab. In this case, the safety vent 400 can function as a cathode terminal, and the battery can 300 may function as an anode terminal.

Meanwhile, the external electrical component connected to the opposite side of the first external conductive wire 610 or the second external conductive wire 620 may be another secondary battery or an electric component requiring power supply.

Explaining again from the viewpoint of a battery module configured by gathering a plurality of secondary batteries, the battery module according to the present embodiment includes secondary batteries 100 according to the present embodiment, and a first external conductive wire 610 and a second external conductive wire 620 which electrically connect the secondary batteries 100. The first external conductive wire 610 is attached to the upper surface of the central part 410 and the second external conductive wire 620 is attached to the battery can 300. The secondary batteries 100 according to the present embodiment are gathered to form a battery module, and the respective secondary batteries 100 may be connected to each other in series or in parallel through the first external conductive wire 610 and the second external conductive wire 620.

Fig. 8 is a partial cross-sectional view showing the state of the secondary battery of Fig. 7 when the internal pressure rises.

Referring to Fig. 8, when the secondary battery 100 is placed in an abnormal operating state such as overcharging or external short circuit, gas is rapidly generated inside the secondary battery 100 to increase internal pressure. The shape of the safety vent 400 is reversed by the increased internal pressure P, and eventually the notch part 400N having low strength due to its thin thickness may be torn off. Thereby, in the safety vent 400, the outer peripheral part 420 to which the electrode tab 210t is connected and the central part 410 to which the first external conductive wire 610 is connected are completely separated from each other. When the secondary battery 100 is placed in an abnormal operating state, the current can be interrupted in the same manner as above. An attempt was made to improve the safety of the secondary battery 100 by preventing the secondary battery 100 from leading to explosion due to continued heat generation.

Compared with the conventional secondary battery 10 shown in Figs. 1 and 2, the secondary battery 100 according to the present embodiment has a form in which the upper end cap 41 and the CID filter 43 are eliminated. This secondary battery has the advantage that by removing the upper end cap and the CID filter parts, the space utilization can be improved and the battery capacity can be increased by the space of the removed parts.

In addition, by setting the safety vent 400 to be distinguished from the portion to which the electrode tab 210t is attached and the portion to which the first external conductive wire 610 is attached, with the notch part 400N serving as a boundary, the current flow can be effectively interrupted in abnormal operating state, even without the upper end cap and the CID filter.

Further, as described above, as the internal pressure P rises, the notch part 400N is cut or torn and the safety vent 400 is opened, so that internal gas is discharged. In the case of the conventional cylindrical secondary battery 10 shown in Figs. 1 and 2, since the upper end cap 41 is positioned on the safety vent 42, the spatial portion is degraded and the safety vent 42 is not fully opened. As a result, the gas cannot be effectively discharged. Further, the upper end cap 41 itself may interfere with gas discharge. Unlike the same, in the secondary battery 100 according to the present embodiment, the safety vent 400 is exposed to the outside at the upper end without an upper end cap, and therefore, the shape reversal or separation of the safety vent 400 when the pressure resistance rises can be freely performed without being hindered. That is, in this embodiment, there is no upper end cap that may interfere with the opening of the safety vent 400, and therefore, when the internal pressure rises, the notch part 400N of the safety vent 400 is completely interrupted, and the central part 410 and the outer peripheral party 420 can be completely separated. Therefore, compared with the conventional cylindrical secondary battery 10, gas discharge is more effective, and current interruption can be reliably performed by separating the central part 410 and the outer peripheral part 420 in an abnormal operating state.

Meanwhile, referring to Fig. 6 again, the thickness T1 of the notch part 400N may be 5% or more and 50% or less of the thickness T2 of the safety vent 400. As described above, the notch part 400N may be in the form of a groove having a thickness less than the adjacent region, and the thickness T1 of the notch part 400N may be 5% or more and 50% or less of the thickness T2 of other regions of the safety vent 400 other than the region where the notch part 400N is formed.

If the thickness T1 of the notch part 400N is less than 5% of the thickness T2 of the safety vent 400, it may help to completely break the notch part 400N when the internal pressure rises. However, since the thickness T1 of the notch part 400N is excessively thin, cracks may occur due to impact during assembly or installation of the secondary battery 100 or a battery module including the same. That is, there may be a problem that a crack is formed in advance in the notch part 400N before the internal pressure rises in an abnormal operation state. Under internal pressure rise situation, the notch part 400N is not completely broken due to the pre-generated cracks, which causes a problem that the current is not cut off.

Meanwhile, when the thickness T1 of the notch part 400N exceeds 50% of the thickness T2 of the safety vent 400, the thickness T1 of the notch part 400N is excessively thick, and thus, the notch part 400N may not be completely broken even if the internal pressure rises due to an abnormal operating state. When the notch part 400N is not completely broken, similarly, the central part 410 and the outer peripheral part 420 are not completely separated, and thus, current is not interrupted.

Next, the coupling form between the battery can 300 and the safety vent 400 will be described in detail with reference with Figs. 4 and 5.

Referring to Figs. 4 and 5 again, the safety vent 400 is coupled to the opened upper part of the battery can 300 to seal the electrode assembly 200 and the electrolyte contained in the battery can 300. The battery can 300 and the safety vent 400 may be crimped and joined. Specifically, the secondary battery 100 according to the present embodiment may further include a gasket 500 positioned between the battery can 300 and the safety vent 400, and an upper end of the battery can 300 is crimped and joined while being bent in the direction where the gasket 500 is located, so that a crimping part 300C may be formed in the battery can 300. That is, the gasket 500 may surround the safety vent 400 and the crimping part 300C of the bent battery can 300 may surround the gasket 500.

The gasket 500 may interrupt electrical connection between the battery can 300 and the safety vent 400 while increasing sealing force between the crimping part 300C and the safety vent 400. For this purpose, the gasket 500 may include an electrically insulating material. Examples thereof include one or more materials selected from the group consisting of polypropylene (PP), polyethylene terephthalate (PET), polybutylene terephthalate (PBT) and perfluoroalkoxy alkane (PFA).

The safety vent 400 according to this embodiment may be formed with a bent part 400B. Specifically, as shown in Figs. 4 and 5, the safety vent 400 may include a bent part 400B formed by bending a portion of the outer peripheral part 420 in an upward direction. By providing such a bent part 400B, deformation transmitted to the safety vent 400 during crimping joint can be reduced. Further, as described above, in an abnormal operating state, the notch part 400N of the safety vent 400 is broken and separated into a central part 410 and an outer peripheral part 420. Thereby, the flow of current is interrupted, but a certain amount of space is preferably formed between the central part 410 of the safety vent 400 and the electrode tab 210t in order to reliably interrupt the current. Accordingly, while the position of the safety vent 400 itself is kept as it is and the height of the secondary battery 100 is not increased, a bent part 400B bent in an upward direction may be formed in order to increase the distance between the central part 410 and the electrode tab 210t.

Meanwhile, in the case of the crimping joint described above, strong physical compression can be applied to the safety vent 400, which may cause a problem that and the safety vent 400 is damaged. In particular, in a structure in which the safety vent 400 is exposed without an upper end cap as in the present embodiment, there is a risk that the safety vent 400 may be damaged. However, if the thickness of the safety vent 400 is formed thicker than before to supplement the stiffness of the safety vent 400, there is a high possibility that the shape reversal or separation of the safety vent 400 may not be properly performed when the internal pressure rises.

Therefore, in the present embodiment, instead of simply increasing the thickness of the safety vent 400, a curling part 400C may be provided at a portion corresponding to the crimping part 300C in the safety vent 400. Specifically, the safety vent 400 may include a curling part 400C formed by bending the outermost region of the outer peripheral part 420, and the gasket 500 may surround the curling part 400C. For convenience of explanation, Figs. 3 and 5 show the state of the flange part 400F before the curling part 400C is formed, and Fig 4 shows a state in which the flange part 400F is bent inward to form the curling part 400C.

The crimping part 300C of the battery can 300 may surround the safety vent 400 with the gasket 500 being interposed therebetween. Among them, crimping joint may be performed while surrounding the curling part 400C of the safety vent 400. That is, the gasket 500 may be positioned between the crimping part 300C and the curling part 400C. Accordingly, the central part 410 of the safety vent 400 is made of one layer, but the curling part 400C of the outer peripheral part 420 surrounded by the crimping part 300C may be made of two layers. That is, by providing the curling part 400C, an attempt was made to prevent damage to the safety vent 400 that may occur during crimping joint and at the same time, not interfere with the shape reversal or separation of the safety vent 400 when the internal pressure rises.

Meanwhile, referring to Fig. 8 again, the second external conductive wire 620 may be joined to the crimping part 300C of the battery can 300. The second external conductive wire 620 may be joined to another region of the battery can 300, but the second external conductive wire 620 is preferably joined to the crimping part 300C in order to shorten the current path between the cathode and the anode and thus reduce the total resistance of the battery module.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The secondary battery or the battery module according to embodiments of the present disclosure described above can be mounted together with various control and protection systems such as BMS (Battery Management System), BDU (Battery Disconnect Unit), and a cooling system to form a battery pack.

The secondary battery, the battery module or the battery pack can be applied to various devices. For example, it can be applied to vehicle means such as an electric bike, an electric vehicle and a hybrid electric vehicle, or ESS(Energy Storage System), and can be applied to various devices capable of using a secondary battery, without being limited thereto.

While the preferred embodiments of the present disclosure have been illustrated and described above, the present disclosure is not limited to the aforementioned specific embodiments, various modifications and improvements can be made by those skilled in the art without departing from the subject matters of the present disclosure that are defined in the appended claims,

### [Description of Reference Numerals]

100: secondary battery
200: electrode assembly
300: battery can
400: safety vent
400N: notch part
410: central part
420: outer periphery
500: gasket

## Claims

1. A secondary battery comprising:
an electrode assembly which comprises electrodes and a separator;
a battery can which houses the electrode assembly and has an opened upper part; and
a safety vent which is coupled to the open upper part of the battery can,
wherein the electrode assembly comprises an electrode tab protruding from one of the electrodes in a direction in which the safety vent is located,
wherein the safety vent is formed with a notch part extending along the peripheral direction,
wherein the safety vent comprises a central part positioned inside the notch part and an outer peripheral part positioned outside the notch part, and
wherein the electrode tab is attached to a lower surface of the outer peripheral part.

2. The secondary battery of claim 1, wherein:
the notch part is in the form of a groove having a thickness less than that of an adjacent region.

3. The secondary battery of claim 1, wherein:
the safety vent is exposed to the outside at the upper end.

4. The secondary battery of claim 3, wherein:
a first external conductive wire for connection with an external electrical component is attached to the upper surface of the central part.

5. The secondary battery of claim 1,
further comprising a gasket positioned between the battery can and the safety vent,
wherein an upper end of the battery can is crimped and joined while being bent in a direction where the gasket is positioned, so that a crimping part is formed in the battery can.

6. The secondary battery of claim 5, wherein:
the safety vent comprises a curling part formed by bending an outermost region of the outer peripheral part, and
the gasket surrounds the curling part.

7. The secondary battery of claim 6, wherein:
the gasket is positioned between the crimping part and the curling part.

8. The secondary battery of claim 1, wherein:
the safety vent comprises a bent part formed by bending a portion of the outer peripheral portion in an upward direction.

9. The secondary battery of claim 1, wherein:
the thickness of the notch part is 5% or more and 50% or less of the thickness of the safety vent.

10. A battery module comprising:
the secondary batteries of claim 1; and
a first external conductive wire and a second external conductive wire which electrically connect the secondary batteries,
wherein the first external conductive wire is attached to the upper surface of the central part, and
the second external conductive wire is attached to the battery can.

11. The battery module of claim 10, wherein:
the battery can and the safety vent are crimped and joined to form a crimping part in the battery can, and
the second external conductive wire is joined to the crimping part.
